# EUROPÄISCHE PATENTSCHRIFT

(11) **EP 1 899 186 B1**
(45) Veröffentlichungstag und Bekanntmachung des Hinweises auf die Patenterteilung: **29.10.2008**
(21) Anmeldenummer: 06776071.0
(22) Anmeldetag: 23.06.2006
(51) Int. Cl.: B60G 21/055

(54) **AKTIVER, GETEILTER KRAFTFAHRZEUGSTABILISATOR MIT EINGEBAUTEM ELEKTRISCHEM SCHWENKMOTOR**
ACTIVE, DIVIDED MOTOR VEHICLE STABILIZER COMPRISING AN INCORPORATED ELECTRIC SWIVEL MOTOR
STABILISATEUR ACTIF DE VEHICULE AUTOMOBILE, EN DEUX PARTIES ET A MOTEUR PIVOTANT ELECTRIQUE INTEGRE

(30) Priorität: 02.07.2005 DE 102005031037
(43) Veröffentlichungstag der Anmeldung: 19.03.2008
(73) Patentinhaber: Bayerische Motoren Werke Aktiengesellschaft, 80809 München (DE)
(72) Erfinder: SIMKOVICS, Reinhard, Dr., 85356 Freising (DE)
(86) Internationale Anmeldenummer: PCT/EP2006/006035
(87) Internationale Veröffentlichungsnummer: WO 2007/003279

(56) Entgegenhaltungen:
- WO-A-20/04085179
- DE-A1- 19 846 275
- US-A1- 2003 137 090

## Beschreibung

Die Erfindung betrifft einen aktiven, geteilten Stabilisator für ein Kraftfahrzeug mit einem eingebauten elektrischen Schwenkmotor nach dem Oberbegriff des ersten Anspruchs.

Es ist bereits bekannt, einen Kraftfahrzeugstabilisator in ein erstes, der Aufhängung des linken Rades einer Fahrzeug-Achse zugeordnetes Stabilisatorteil und in ein zweites, der Aufhängung des rechten Rades dieser Fahrzeug-Achse zugeordnetes Stabilisatorteil zu unterteilen. Sind diese Stabilisatorteile um deren gemeinsame Längsachse gegeneinander verdrehbar, kann gegenüber Fahrwerken mit einstückigem Stabilisator eine deutlich gesteigerte Wankstabilität erreicht werden, wenn zwischen den beiden Stabilisatorteilen ein geeigneter Schwenkmotor vorgesehen ist, der aufgrund einer geeigneten Ansteuerung diese Stabilisatorteile bedarfsgerecht gegeneinander verdreht.

Ein elektromechanischer Schwenkmotor umfasst mindestens einen Elektromotor und ein mechanisches Getriebe. Damit erhält man einen Stabilisator, dessen beide Stabilisatorteile, die durch den elektromechanischen Schwenkmotor miteinander verbunden sind, durch diesen gezielt zueinander verdreht werden können, damit ein gewünschtes Stabilisatormoment erzeugt wird, welches dann das Wanken des Fahrzeug-Aufbaus verhindert. Einen solchen Stabilisator beschreibt die DE 198 46 275 A1.

Bei Stabilisatoren mit eingebautem Schwenkmotor ist die tordierbare wirksame Länge eingeschränkt gegenüber herkömmlichen Stabilisatoren ohne Schwenkmotor. Die wirksame Torsionslänge setzt sich zusammen aus der Länge der beiden Stabilisatorteile in Fahrzeugquerrichtung. Durch diese Verkürzung der wirksamen Torsionslänge, auf Grund des eingebauten Schwenkmotors, können sich die Dauerfestigkeitswerte des Stabilisators verschlechtern. Außerdem wird dadurch die Charakteristik des Kraftfahrzeugs beim Unterdrücken von Wankbewegungen verändert, da sich die Gesamtfedersteifigkeit erhöht.

Aufgabe der Erfindung ist es, diese Nachteile möglichst zu vermeiden.

Die Aufgabe wird mit den Merkmalen des Anspruchs 1 gelöst. Weitere Ausgestaltungen der Erfindung ergeben sich aus den abhängigen Ansprüchen.

Nach der Erfindung ist ein geteilter Kraftfahrzeugstabilisator mit einem eingebauten Schwenkmotor zur Wankregelung, der mindestens aus einem Verstellantrieb aus Elektromotor und Schwenkmotorgetriebe und aus einem Gehäuse besteht, wobei mindestens ein Gehäuseteil mit einem dazugehörigen Stabilisatorteil zur Drehmomentübertragung verbunden ist, dadurch gekennzeichnet, dass das Gehäuseteil eine axial gerichtete, zentrische Einstülpung besitzt, in die sich das Stabilisatorteil im wesentlichen bis zu deren Ende hinein erstreckt und dass sich dort die Verbindung zur Drehmomentübertragung zwischen dem Gehäuseteil und dem dazu gehörigen Stabilisatorteil befindet.

Das hat den Vorteil, dass das Stabilisatorteil bei gleicher Belastung um einen größeren Weg ausgelenkt wird und somit die Unterdrückung der Wankbewegung weicher gestaltet werden und feiner abgestimmt werden kann. Die Lebensdauer des Stabilisators kann erhöht werden. Durch die Möglichkeit, Stabilisatoren mit kleinerem Durchmesser verwenden zu können, wird das Fahrzeuggewicht verringert und die Herstellkosten für den Stabilisator sind geringer. Die Reduzierung der passiven Stabilisatorlänge durch den Einbau des Schwenkmotors ist so minimiert, wodurch sich geringere Federraten erzielen lassen. Die führt zu besseren Komforteigenschaften eines Kraftfahrzeugs mit aktivem Stabilisator. Somit wird das Systemverhalten des aktiven Wankstabilisierungssystems jenem eines passiven Stabilisators angenähert. Damit kann die Grundauslegung von Fahrwerken für Fahrzeuge mit und ohne aktive Wankstabilisierung identisch ausgeführt werden, was eine wesentliche Kostenreduzierung durch Verwendung von Gleichteilen bewirkt.

Bei einer vorteilhaften Ausführung der Erfindung ist der Elektromotor so gestaltet, dass sich dessen Stator und Rotor mindestens teilweise um die zentrische Einstülpung des Gehäuseteils herum erstrecken. Dabei kann vorteilhafterweise der Rotor des Elektromotors auf der zentrischen Einstülpung des Gehäuseteils gelagert und vorzugsweise topfförmig ausgebildet sein.

Eine weitere vorteilhafte Ausführung der Erfindung sieht vor, dass das Schwenkmotorgetriebe ein ein- oder zweistufiges Planetengetriebe oder ein Harmonic-Drive-Getriebe ist. Vorteilhafterweise erfolgt dann der Antrieb des Planetengetriebes über ein Sonnenrad und der Abtrieb über einen Planetenradträger.

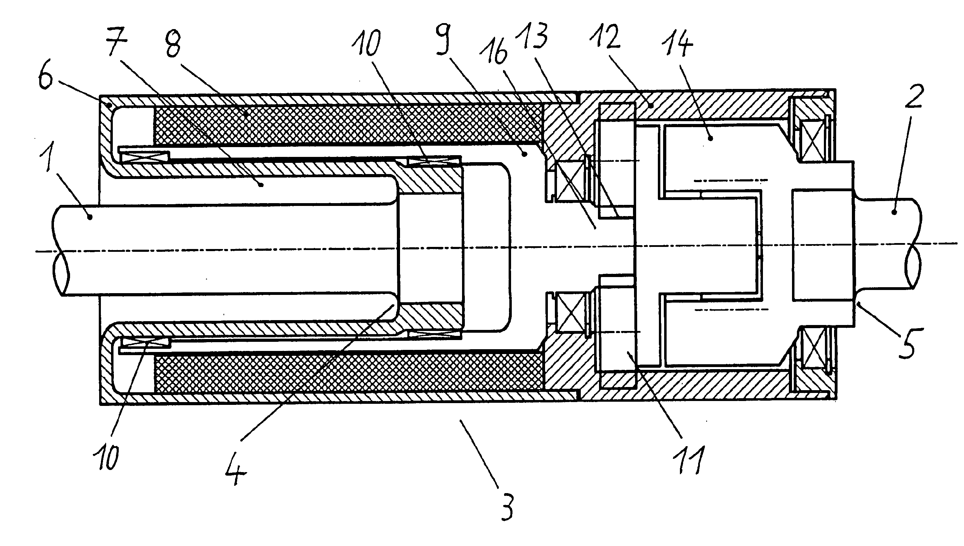

Ein bevorzugtes Ausführungsbeispiel der Erfindung ist in der nachfolgenden Beschreibung und der zugehörigen Zeichnung näher dargestellt. Dazu zeigt die einzige Figur in einer Schnittdarstellung einen erfindungsgemäßen elektrischen Schwenkmotor für einen Kraftfahrzeugstabilisator zum Verdrehen zweier Stabilisatorteile gegeneinander.

Die Figur zeigt einen Schwenkmotor 3 für einen aktiven Stabilisator für ein Kraftfahrzeug, zur Koppelung von zwei nicht gezeichneten Rädern einer Fahrzeugachslinie. Ein erstes Stabilisatorteil 1 ist dem einen Rad zugeordnet und ein zweites Stabilisatorteil 2 ist dem anderen Rad zugeordnet. Die beiden Stabilisatorteile 1, 2 sind gekoppelt durch einen Aktuator, ausgebildet als elektrischer Schwenkmotor 3, zur Steuerung der Seitenneigung des Kraftfahrzeugs durch Verspannen der Stabilisatorteile 1, 2 gegeneinander. Jedes Stabilisatorteil 1,2 erstreckt sich von einem dem Schwenkmotor 3 zugeordneten Anschluss 4, 5 zu einem, nicht gezeichneten, dem Rad zugeordneten Anschluss. An einem Gehäuseteil 6 ist das erste Stabilisatorteil 1 und an einem Getriebeabtriebselement das zweite Stabilisatorteil 2 befestigt. Bruchteile der Stabilisatorteile 1, 2 sind in der Figur gezeigt, woraus hervorgeht, dass die Stabilisatorteile 1, 2 im Bereich der Befestigung koaxial zum Schwenkmotor 3 angeordnet sind. Die Drehmomentübertragung auf die Stabilisatorteile 1, 2 erfolgt über eine geeignete Wellen-Nabenverbindung, zum Beispiel eine Verzahnung zwischen dem Gehäuseteil 6 und dem ersten Stabilisatorteil 1, beziehungsweise zwischen dem Getriebeabtriebselement und dem zweiten Stabilisatorteil 2.

Der Schwenkmotor 3 ist so gestaltet, dass ein Gehäuseteil 6 eine axial gerichtete, zentrische Einstülpung 7 besitzt, in die sich das zugehörige Stabilisatorteil 1 im wesentlichen bis zu deren Ende hinein erstreckt. Dort befindet sich die Verbindung zur Drehmomentübertragung, der Anschluß 4, zwischen dem Gehäuseteil 6 und dem dazu gehörigen Stabilisatorteil 1. Die wirksame Torsionslänge des Stabilisatorteils 1 ist dadurch verlängert, dass dieses in den Schwenkmotor 3 hinein geführt ist und erst dort an dem Anschluss 4 mit diesem verbunden ist. Damit ist die Federrate des Stabilisatorteils 1 bei gleichem Querschnitt und sonstigem gleichem Aufbau kleiner im Vergleich mit einem Stabilisatorteil nach dem Stand der Technik, das sich auf gleiche Weise von dem dem Rad zugeordneten Anschluss zu einem dem Schwenkmotor 3 zugeordneten Anschluss außerhalb des Gehäuseteils 6 erstreckt.

Der als Schwenkmotorantrieb ins Gehäuseteil 6 eingebaute Elektromotor ist so gestaltet, dass sich dessen Stator 8 und Rotor 9 mindestens teilweise um die zentrische Einstülpung 7 des Gehäuseteils 6 herum erstrecken, wobei der topfförmig ausgebildete Rotor 9 auf der zentrischen Einstülpung 7 des Gehäuseteils 6 über geeignete Lager 10, zum Beispiel Gleitlager, gelagert ist. Der Rotor 9 des Elektromotors ist innerhalb des an seinem Außenumfang mit dem Gehäuseteil 6 verbundenen, als Hohlzylinder ausgebildeten Stators 8 im Gehäuseteil 6 eingebaut. Dabei kann der Elektromotor vorteilhafterweise ein Innenläufermotor in Form eines Transversalflussmotors sein. Abweichend davon sind auch Außenläufermotor oder Radialflussmotor denkbar. Zur Wankregelung wird der Elektromotor bestromt, der dann sein Drehmoment an ein Schwenkmotorgetriebe abgibt.

Das Schwenkmotorgetriebe ist ein zweistufiges Planetengetriebe 11, dessen Antrieb über ein Sonnenrad 13 und dessen Abtrieb über einen Planetenradträger 14 erfolgt, der über den dem Schwenkmotor 3 zugeordneten Anschluss 5 mit dem Stabilisatorteil 2 verbunden ist. Eine Verzahnung des durch den Elektomotor angetriebenen Sonnenrads 13 ist, in Längsrichtung gesehen, an einem Ende des Rotors 9 angebracht, das als Rotorlagerzapfen 16 fliegend in einem weiteren Gehäuseteil 12 gelagert ist. Rotorlagerzapfen 16, Rotor 9 und Sonnenrad 13 können einstückig oder mehrteilig ausgeführt sein.

## Patentansprüche

1. Geteilter Kraftfahrzeugstabilisator mit einem eingebauten Schwenkmotor (3) zur Wankregelung, der mindestens aus einem Verstellantrieb aus Elektromotor und Schwenkmotorgetriebe und aus einem Gehäuse besteht, wobei mindestens ein Gehäuseteil (6) mit einem dazugehörigen Stabilisatorteil (1) zur Drehmomentübertragung verbunden ist, **dadurch gekennzeichnet, dass** das Gehäuseteil (6) eine axial gerichtete, zentrische Einstülpung (7) besitzt, in die sich das Stabilisatorteil (1) im wesentlichen bis zu deren Ende hinein erstreckt und dass sich dort die Verbindung zur Drehmomentübertragung zwischen dem Gehäuseteil (6) und dem dazu gehörigen Stabilisatorteil (1) befindet.

2. Geteilter Kraftfahrzeugstabilisator nach Anspruch 1, **dadurch gekennzeichnet, dass** der Elektromotor so gestaltet ist, dass sich dessen Stator (8) und Rotor (9) mindestens teilweise um die zentrische Einstülpung (7) des Gehäuseteils (6) herum erstreckt.

3. Geteilter Kraftfahrzeugstabilisator nach einem der Ansprüche 1 oder 2, **dadurch gekennzeichnet, dass** der Rotor (9) des Elektromotors auf der zentrischen Einstülpung (7) des Gehäuseteils (6) gelagert ist.

4. Geteilter Kraftfahrzeugstabilisator nach einem der Ansprüche 1 bis 3, **dadurch gekennzeichnet, dass** der Rotor (9) topfförmig ausgebildet ist.

5. Geteilter Kraftfahrzeugstabilisator nach einem der Ansprüche 1 bis 4, **dadurch gekennzeichnet, dass** das Schwenkmotorgetriebe ein ein- oder zweistufiges Planetengetriebe (11) oder ein Harmonic-Drive-Getriebe ist.

6. Geteilter Kraftfahrzeugstabilisator nach Anspruch 5, **dadurch gekennzeichnet, dass** der Antrieb des Planetengetriebes (11) über ein Sonnenrad (13) und der Abtrieb über einen Planetenradträger (14) erfolgt.

## Claims

1. A split motor vehicle stabiliser with a built-in pivot motor (3) for roll control, which comprises at least an actuating drive having an electric motor and pivot motor transmission and of a housing, in which at least one housing part (6) is connected to an associated stabiliser part (1) for transmitting torque, **characterised in that** the housing part (6) has an axially directed central recess (7), into which the stabiliser part (1) extends substantially to the end thereof and **in that** the connection for transmitting torque is located there between the housing part (6) and the associated stabiliser part (1).

2. A split motor vehicle stabiliser according to claim 1, **characterised in that** the electric motor is designed such that the stator (8) and rotor (9) thereof extend at least partially around the central recess (7) of the housing part (6).

3. A split motor vehicle stabiliser according to either of claims 1 or 2, **characterised in that** the rotor (9) of the electric motor is mounted on the central recess (7) of the housing part (6).

4. A split motor vehicle stabiliser according to any one of claims 1 to 3, **characterised in that** the rotor (9) is pot-shaped.

5. A split motor vehicle stabiliser according to any one of claims 1 to 4, **characterised in that** the pivot motor transmission is a single-stage or two-stage planetary gear (11) or a harmonic drive transmission.

6. A split motor vehicle stabiliser according to claim 5, **characterised in that** the drive of the planetary gear (11) takes place by means of a sun wheel (13) and the output by means of a planet wheel carrier (14).

## Revendications

1. Stabilisateur de véhicule automobile en deux parties, comportant un moteur de pivotement (3) pour réguler le roulis, ce moteur se composant d'au moins un actionneur formé d'un moteur électrique et d'une transmission de moteur de pivotement ainsi que d'un boîtier,
au moins une partie de boîtier (6) étant reliée à une partie de stabilisateur (1) correspondant, pour la transmission du couple,
**caractérisé en ce que**
la partie de boîtier (6) possède un manchon embouti (7) qui s'étend dans la partie de stabilisateur (1) pratiquement jusqu'à son extrémité et **en ce qu'**il correspond, à la liaison pour la transmission du couple entre la partie de boîtier (6) et la partie correspondante de stabilisateur (1).

2. Stabilisateur de véhicule automobile, en deux parties selon la revendication 1,
**caractérisé en ce que**
le moteur électrique est conçu pour que son stator (8) et son rotor (9) entourent au moins en partie le manchon embouti central (7) de la partie de boîtier (6).

3. Stabilisateur de véhicule automobile, en deux parties selon la revendication 1 ou 2,
**caractérisé en ce que**
le rotor (9) du moteur électrique est monté sur le manchon embouti central (7) de la partie de boîtier (6).

4. Stabilisateur de véhicule automobile, en deux parties selon l'une des revendications 1 à 3,
**caractérisé en ce que**
le rotor (9) est réalisé en forme de pot.

5. Stabilisateur de véhicule automobile, en deux parties selon l'une des revendications 1 à 4,
**caractérisé en ce que**
la transmission à moteur de pivotement est une transmission planétaire à un ou deux étages (11) ou une transmission d'entraînement harmonique.

6. Stabilisateur de véhicule automobile, en deux parties selon la revendication 5,
**caractérisé en ce que**
l'entrée de la transmission planétaire (11) se fait par l'intermédiaire d'une roue solaire (13) et la sortie par l'intermédiaire d'un support de roues planétaires (14).
